# EUROPEAN PATENT APPLICATION

(11) **EP 4 339 585 A1**
(43) Date of publication of application: **20.03.2024**
(21) Application number: 22863986.0
(22) Date of filing: 09.06.2022
(51) Int. Cl.: G01N 1/28, G02B 21/34

(54) **SEALING APPARATUS**

(30) Priority: 31.08.2021 JP 2021140941
(71) Applicant: SAKURA SEIKI CO., LTD., Chikuma-shi Nagano 387-0015 (JP); SAKURA FINETEK JAPAN CO., LTD., Chuo-ku Tokyo 103-0023 (JP)
(72) Inventor: KOMIYAMA, Kazuki, Chikuma-shi, Nagano 387-0015 (JP); TAKAHASHI, Kyohei, Chikuma-shi, Nagano 387-0015 (JP); HASHIZUME, Daiki, Chikuma-shi, Nagano 387-0015 (JP)
(74) Representative: Purdylucey Intellectual Property
(86) International application number: PCT/JP2022/023236
(87) International publication number: WO 2023/032398

(57) **Abstract**

This invention addresses the problem of providing a sealing apparatus that makes it possible to: enhance the operability, workability, and safety of initial cover film positioning compared to the prior art; prevent cover film and the apparatus interior from becoming unclean and having foreign matter adhere thereto; and accurately position such that cover film is not wasted. To solve this problem, a sealing apparatus (10) is made to comprise a sealing unit (42), feed rollers (54) that is provided between a mounting portion (30) that a cover film (26) is mounted on and a cutter (50) and is capable of moving the cover film (26) forward and backward, a first sensor (64) that is capable of detecting a leading end portion (26a) of the cover film (26) on the downstream side of the feed rollers (54), and a control unit (62), and the control unit (62) uses position information from the first sensor (64) to carry out control for cutting the cover film (26) after drawing the same out to a position at which the leading end portion (26a) is beyond the cutting position of the cutter (50) by a prescribed length.

## Description

### Technical Field

The present invention relates to a sealing apparatus.

### Background Art

A pathological specimen is prepared as follows. Specifically, a specimen such as a tissue or cell collected from humans, animals, and the like is embedded, sliced, and attached and dyed on a slide glass. Then, a cover film or a cover glass is stuck on the specimen to seal the specimen. Thus, a pathological specimen for microscopic observation is prepared. There has been known a sealing apparatus that sticks the cover film or the cover glass on the specimen disposed on the slide glass to seal the specimen in this process (see PTL 1: JP-A-2018-25512).

In this sealing apparatus that seals the specimen using the cover film as described as an example in PTL 1, a long cover film wound around a ring-shaped holder (that may be referred to as "cover film core" or the like, and thus is a core) is fed by using feed rollers and is cut by using a cutter, by a predetermined amount, that is, a predetermined dimension at a time, and then is supplied to a sealing unit that seals the specimen. With this configuration, sealing can be performed with the cover film for the sealing having a uniform length (longitudinal and lateral dimensions) reliably stuck on the specimen.

Once the apparatus stops operating, the cover film wound around the holder is removed, together with the holder, and stored by the user, to prevent contamination and attachment of foreign objects such as dust during the unused period. Thus, the sealing apparatus requires, when the apparatus starts operating, "initial positioning" for the cover film including first mounting the cover film wound around the holder to the apparatus, then drawing the cover film from the holder, and aligning the leading end portion of the cover film with the cut position of the cutter. With the initial positioning executed, when the sealing operation starts, the first cover film cut by the cutter and supplied to the sealing unit can have the same length as the second and subsequent cover films cut and supplied to the sealing unit. Thus, all the cover films used for the sealing can have the same length. The leading end portion of the cover film (hereinafter, may be referred to as "cover film piece") cut off during the initial positioning is discarded.

### Citation List

### Patent Literature

PTL 1: JP-A-2018-25512

### Summary of Invention

### Technical Problem

According to the configuration of the conventional sealing apparatus, the initial positioning for the cover film is executed with the user drawing the cover film to a position where the leading end portion of the cover film protrudes from the cut position of the cutter for a predetermined length while visually checking the leading end position of the cover film, and then manually operating the cutter for cutting the cover film to align the leading end portion of the cover film with the cut position of the cutter.

This means that the user needs to be involved in all the procedures related to the initial positioning, resulting in low user friendliness, low operability, and low workability due to the cumbersomeness. Furthermore, there is a risk of contamination and attachment of foreign object on and in the cover film and the interior the apparatus. The adjustment of the leading end position of the cover film through visual checking is likely to take time. When the cover film is excessively drawn, an excessively long cover film piece is discarded, and thus the cover film may be wasted. Furthermore, the user manually operating the cutter might get hurt by misoperation.

### Solution to Problem

The present invention is made in view of the above, and an object of the present invention is to provide a sealing apparatus that, compared with the conventional configuration, achieves improvement in operability, workability, and safety in the initial positioning for a cover film, and enables accurate positioning without wasting the cover film, while preventing contamination and attachment of foreign objects on and in the cover film and the apparatus.

The present invention achieves the above object by the solution described below as an embodiment.

A sealing apparatus according to the present invention includes: a mounting portion to which a cover film wound around a holder is mounted via the holder; a cutter configured to cut the cover film into a predetermined length; a sealing unit configured to stick the cover film cut into the predetermined length on a specimen disposed on a slide glass to seal the specimen; feed rollers that are provided between the mounting portion and the cutter, and are capable of feeding the cover film, drawn from the holder, forward and backward; a first sensor capable of detecting a leading end portion of the cover film on a downstream side of the feed rollers; and a control unit configured to drivingly control the feed rollers and the cutter, wherein when during initial positioning for the cover film, the cover film is drawn toward the downstream side of the feed rollers, and the first sensor detects the leading end portion of the cover film, the control unit performs control of driving, based on position information on the leading end portion of the cover film from the first sensor, the feed rollers to feed the cover film forward or backward, to draw the cover film to a position where the leading end portion of the cover film protrudes from a cut position of the cutter for a predetermined length, and then driving the cutter to cut the cover film.

With this configuration, the leading end position of the cover film can be accurately recognized based on the position information from the first sensor. Then, the leading end position of the cover film can be aligned with the cut position of the cutter by drivingly controlling the feed rollers based on the current drawn state of the cover film to make the cover film fed forward or backward to be accurately drawn to the position where the leading end portion protrudes from the cut position of the cutter for the predetermined length, and driving the cutter to cut the cover film. Thus, compared with a conventional configuration, operability is improved due to higher user friendliness, and workability is improved due to a smaller amount of time and labor required. The initial positioning can be performed in a state where an opening-closing door is closed, and thus can be safely performed with the contamination and attachment of foreign object on and in the cover film and the sealing apparatus prevented. Through an accurate control operation based on the position information from the first sensor, the positioning can be performed accurately without wasting the cover film.

Preferably, a notification unit is provided that is configured to issue a notification indicating detection of the leading end portion of the cover film to a user, wherein the control unit performs control of making the notification unit issue the notification, when during the initial positioning for the cover film, the cover film is drawn toward the downstream side of the feed rollers, and the first sensor detects the leading end portion of the cover film, then in response to information input from the user, driving the feed rollers based on the position information on the leading end portion of the cover film from the first sensor, to feed the cover film forward or backward, to draw the cover film to the position where the leading end portion of the cover film protrudes from the cut position of the cutter for the predetermined length, and then driving the cutter to cut the cover film. This configuration in which the notification is issued to the user in response to the detection of the leading end portion of the cover film by the first sensor, can achieve appropriate drawing of the cover film resulting in the notification issued to the user. Furthermore, since the control unit performs the initial positioning only after the input of information from the user, the initial positioning can start at a desired timing.

Preferably, a pair of the first sensors are disposed on a plane orthogonal to a feed direction of the cover film on the downstream side of the feed rollers, to have the cover film provided in between. With this configuration, the leading end portion of the cover film can be accurately detected reliably, regardless of the shape of the leading end portion.

Preferably, the cutter has a notched part that prevents attachment of a cover film piece cut off from the cover film during the initial positioning for the cover film, the notched part being provided by notching a cut surface of the cutter. With this configuration, the cover film piece cut off by the cutter can be prevented from attaching to the cut surface of the cutter to remain in the sealing apparatus.

Preferably, a first falling portion through which the cover film piece cut off from the cover film during the initial positioning for the cover film falls, is provided on the downstream side of and adjacent to the cut position of the cutter, as a gap having a predetermined length. The cover film piece can be swiftly removed through falling, after the execution of the initial positioning.

Preferably, a support lane member is provided that is provided between the mounting portion and the sealing unit, and is configured to support the cover film drawn from the holder, wherein the support lane member is split, at a portion where the cutter is disposed, into a first support lane member on an upstream side and a second support lane member on the downstream side, with a gap of a predetermined interval in between, the gap between the first support lane member and the second support lane member serves as the first falling portion, and a second falling portion is further provided to the second support lane member by notching a splitting surface of the second support lane member on the downstream side. With this configuration in which the second falling portion is provided in addition to the first falling portion, the region for the falling of the cover film piece can be widened to facilitate the falling.

Preferably, a second sensor is provided that is capable of detecting insertion of the cover film between the feed rollers, wherein when during the initial positioning for the cover film, the cover film is inserted between the feed rollers and the second sensor detects the insertion of the cover film between the feed rollers, the control unit performs control of driving the feed rollers to feed the cover film forward to draw the cover film to a position where the first sensor detects the leading end portion of the cover film. With this configuration, the control unit drives the feed rollers so that the cover film can be automatically drawn to a detectable region of the first sensor on the downstream side of the feed rollers. Thus, the operability and workability can be further improved, with an even smaller amount of labor. The effect of preventing the contamination and attachment of foreign objects on and in the cover film and the sealing apparatus can be further improved. The cover film can be fed forward to be drawn by a length required for the first sensor to detect the leading end portion thereof, and in an appropriate direction to enable accurate recognition of the leading end portion thereof, whereby the preparation for the execution of the initial positioning can be swiftly and accurately performed.

Preferably, a motor is provided as a drive unit configured to drive the feed rollers, wherein the control unit drivingly controls the feed rollers by controlling rotation speed or rotation angle and a rotation direction of the motor. With this configuration, the leading end portion can accurately protrude from the cut position for a set length reliably, by accurately feeding the cover film by the set length using the motor an example of which including a stepping motor, a servo motor, and the like. Thus, the positioning can be accurately performed reliably without wasting the cover film.

### Advantageous Effects of Invention

According to the present invention, the initial positioning for the cover film can be executed with, compared with the conventional configuration, improved operability, workability, and safety, and with accurate positioning without wasting the cover film, while preventing contamination and attachment of foreign objects to and in the cover film and the apparatus.

### Brief Description of Drawings

Fig. 1 is a schematic view illustrating an example of a sealing apparatus according to a first embodiment, and is a front view in which part of the internal is partially visible.
Fig. 2 is a perspective view illustrating a configuration between a mounting portion and a sealing unit in the sealing apparatus illustrated in Fig. 1 more in detail.
Fig. 3 is a plan view illustrating a configuration between the mounting portion and the sealing unit in the sealing apparatus illustrated in Fig. 1 more in detail.
Fig. 4 is a perspective view illustrating a reception part that is part of a cutter illustrated in Fig. 2.
Fig. 5 is an explanatory view illustrating a state of a cover film during a sealing operation related to the sealing apparatus illustrated in Fig. 1.
Fig. 6 is an explanatory view illustrating a block diagram representing an example of a control mechanism related to the sealing apparatus illustrated in Fig. 1 together with a state of the cover film at the time of initial positioning.
Figs. 7A and 7B are explanatory views illustrating examples of a shape of a leading end portion of the cover film, Fig. 7A illustrating a leading end portion with a straight shape, Fig. 7B illustrating a leading end portion with a slanted shape.
Fig. 8 is a flowchart illustrating an example of a control operation related to the initial positioning for the cover film in the sealing apparatus illustrated in Fig. 1.
Fig. 9 is a schematic view illustrating an example of a sealing apparatus according to a second embodiment, and is a front view in which part of the internal is partially visible.
Fig. 10 is an explanatory view illustrating a block diagram representing an example of a control mechanism related to the sealing apparatus illustrated in Fig. 9 together with a state of the cover film at the time of initial positioning.
Fig. 11 is a flowchart illustrating an example of a control operation related to the initial positioning for the cover film in the sealing apparatus illustrated in Fig. 9.

### Description of Embodiments

### (First embodiment)

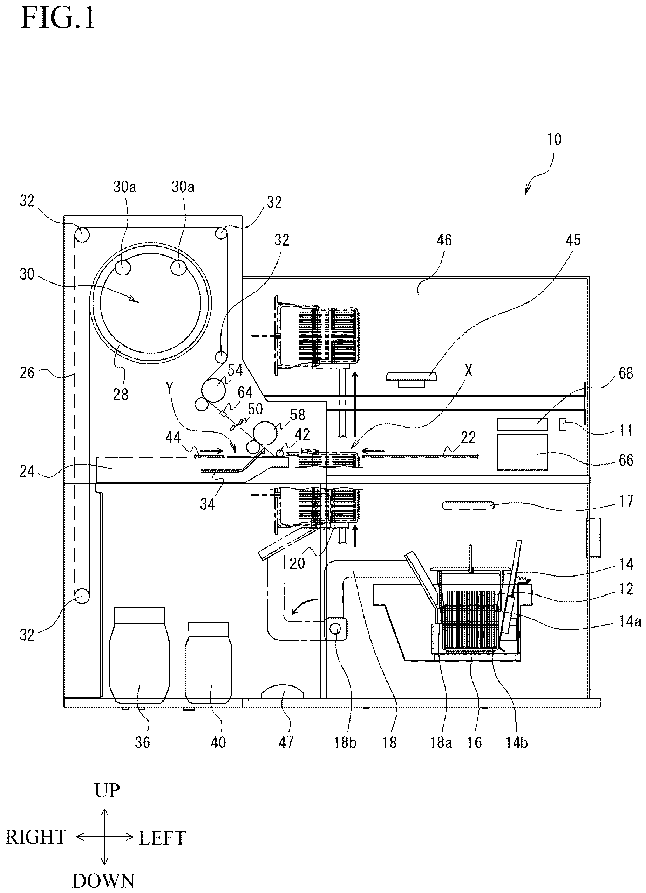

A first embodiment of the present invention is described in detail below with reference to the drawings. Fig. 1 is a schematic view illustrating an example of a sealing apparatus 10 according to the first embodiment, and is a front view in which part of the internal is partially visible. The upward and downward direction of the sealing apparatus 10 illustrated in Fig. 1 is assumed to match the direction of gravity. In all the diagrams for describing the embodiments, the same members having the same function may be denoted by the same reference numeral, and the redundant description thereof may be omitted.

The sealing apparatus 10 according to the present embodiment is an apparatus that sticks a cover film 26 on a specimen disposed on a slide glass 12, to seal the specimen. The specimen applied to the sealing apparatus 10 is attached on the slide glass 12 in advance and the specimen and the slide glass 12 are always handled as one member. Thus, in the present application, for the sake of description, the sealing of specimen may be expressed as "sealing of the slide glass 12". A simple expression "slide glass 12" is assumed to mean the slide glass 12 on which the specimen is attached. The same manner of expression may apply to a description on "dyeing" that is a pre-process for pathological specimen preparation.

To begin with, as illustrated in Fig. 1, the sealing apparatus 10 includes, as an outer configuration, on a front surface of the apparatus 10, a power switch 11, an operation panel that is an operation unit 66 on which setting, an operator operation, as well as other inputs are performed, and a display panel that serves as a notification unit 68 notifying the user of information. In the present embodiment, in addition to the display panel, a buzzer (not illustrated) is provided inside the apparatus 10 as the notification unit 68.

The sealing apparatus 10 further includes, as an internal configuration, a starting bath 16 that is an dipping bath containing a clearing agent. A basket 14 accommodates a predetermined number (10 or 20 for example) of the slide glasses 12 on which the specimen after the dyeing as a pre-process for pathological specimen preparation is attached. The basket 14 is configured in such a manner that the plurality of slide glasses 12 are inserted to be orthogonal to a bottom surface 14b and held while being arranged side by side at a predetermined interval, by means of a frame 14a. The slide glasses 12 are put in the starting bath 16 together with the basket 14, to be dipped in the clearing agent. The clearing agent is an organic solvent such as xylene for example, and provides effects of preventing the drying of the specimen, maintaining a favorable dyed state, and when a sealing agent is previously applied to the cover film 26, dissolving the sealing agent at the time of sealing.

The starting bath 16 is configured to be attachable and detachable to and from the sealing apparatus 10, and is conveyed by the user to a predetermined portion in the sealing apparatus 10 through a starting bath door 17 provided in the front surface of the apparatus 10, while accommodating the basket 14 (that is, the slide glasses 12). Alternatively, the sealing apparatus 10 may be coupled to a dyeing apparatus (not illustrated), and the starting bath 16 may be configured to be automatically conveyed into the sealing apparatus 10 using a conveyance apparatus (not illustrated) after the dyeing has been performed in the dyeing apparatus.

The sealing apparatus 10 further includes a take-out arm 18 that takes out the basket 14 from the starting bath 16. The take-out arm 18 has a distal end provide with a holding unit 18a that holds the basket 14, and is configured to be pivotal about a pivot shaft 18b within a vertical plane. Upon holding the basket 14, the take-out arm 18 is pivoted by 90 degrees within the vertical plane, to flip the basket 14, taken out from the starting bath 16, sideways. As a result, the slide glasses 12 are held by the basket 14 while being oriented horizontally, and arranged side by side at the predetermined interval in the upward and downward direction.

The sealing apparatus 10 further includes a lifting base 20 that lifts and lowers the basket 14 in the upward and downward direction. The basket 14 flipped sideways is placed on the lifting base 20. The lifting base 20 lifts the basket 14 up to a standby position X.

The sealing apparatus 10 further include a push-ejector 22 that pushes out the slide glasses 12 one by one from the basket 14 flipped sideways. The push-ejector 22 pushes a thickness direction surface of the horizontally oriented slide glass 12 at the standby position X, to push and move the slide glass 12 out from the basket 14 and to a sealing position Y on a horizontal table 24. At the sealing position Y, the cover film 26 is stuck on the specimen disposed on the slide glass 12, whereby the specimen is sealed.

The cover film 26 is a long (about 60 m for example) and transparent or semitransparent sheet (made of resin for example), wound around a holder 28, and is mounted to a mounting portion 30 via the holder 28. The holder 28 is freely rotatably mounted to the mounting portion 30. Thus, the cover film 26 can be drawn by rotating the holder 28. For example, in the present embodiment, the holder 28 of a ring shape is supported on a plurality of (two in FIG. 1) rollers 30a horizontally arranged side by side, but is not limited to this. The cover film 26 drawn from the holder 28 is fed diagonally downward by feed rollers 54, cut in a predetermined length by a cutter 50, and is fed to the sealing position Y using cover rollers 58 to be supplied to a sealing unit 42 (described in detail below).

In the present embodiment, as an non-essential configuration, The cover film 26 is guided by a plurality of (four in Fig. 1) guide rollers 32 between the holder 28 and the feed rollers 54, so as to reliably have a length sufficient for sealing the slide glasses 12 in one basket 14, when reaching the sealing position Y from the holder 28. With this configuration, even if a sensor (this sensor is not illustrated and is also an non-essential configuration) detects that the cover film 26 has ran out (the cover film 26 is completely drawn from the holder 28) during the sealing operation, at least the specimen on the slide glasses 12 held by the basket 14 for which the sealing is under progress can be reliably sealed. Thus, the unsealed specimen taken out from the starting bath 16 would not be left exposed to air for a long period of time, whereby the specimen can be prevented from being damaged.

The sealing position Y is provided with a dispensing nozzle 34 from which the sealing agent drops. The dispensing nozzle 34 is connected to a pump and a pipe (both of which are not illustrated), and sucks the sealing agent from a sealing agent bottle 36 using the pump and the pipe. The dispensing nozzle 34 has a distal end portion disposed above the specimen on the slide glass 12 disposed at the sealing position Y, so that the sealing agent can drop onto the specimen. The sealing agent overflowed from the slide glass 12 is stored in a waste liquid bottle 40 via a waste liquid tray (not illustrated) for disposal.

As the sealing agent, an agent is used that includes an adhesive with which the cover film 26 is stuck to the slide glass 12 with the specimen provided in between. Alternatively, when the agent containing adhesive is previously applied to the cover film 26 as in the present embodiment, an agent containing a solvent dissolving the adhesive is used. As the solvent-containing agent, the agent (such as xylene for example) that is the same as the clearing agent may be used. The solvent-containing agent may be referred to as "sealing aid agent" to be distinguished from the "sealing agent" applied to the cover film 26. Still, the "sealing agent" as used in the present application includes both the former adhesive-containing agent and the latter solvent-containing agent (sealing aid agent).

When the sealing agent drops onto the specimen disposed on the slide glass 12 from the dispensing nozzle 34 at the sealing position Y, and the cover film 26 cut in the predetermined length is supplied to the sealing unit 42 provided at the sealing position Y, the cover film 26 is pressed and stuck on the specimen disposed on the slide glass 12 by a sticking roller serving as the sealing unit 42, whereby the specimen is sealed.

The sealing apparatus 10 further includes a return ejector 44 that pushes the slide glass 12 back in a direction opposite to the direction of the pushing by the push-ejector 22 described above. The return ejector 44 pushes the thickness direction surface of the slide glass 12 after the completion of the sealing at the sealing position Y, whereby the slide glass 12 moves to the standby position X to be housed at the original position in the basket 14.

When the sealing is completed for all the slide glasses 12 in the basket 14, and the slide glasses 12 are housed at the original positions in the basket 14, the lifting base 20 on which the basket 14 is placed is lifted, whereby the basket 14 is accommodated in an accommodation unit 46 provided above the standby position X.

The accommodation unit 46 is configured to be openable and closable by an opening-closing cover 45. Thus, the user can open the opening-closing cover 45, and take out the slide glasses 12 after the sealing from the accommodation unit 46 (that is, the sealing apparatus 10) together with the basket 14.

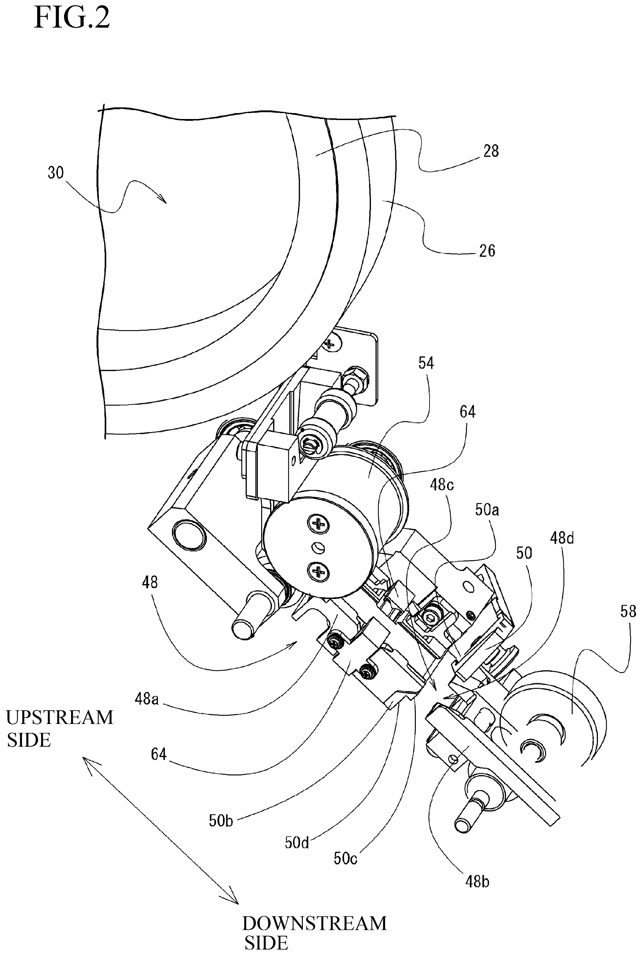

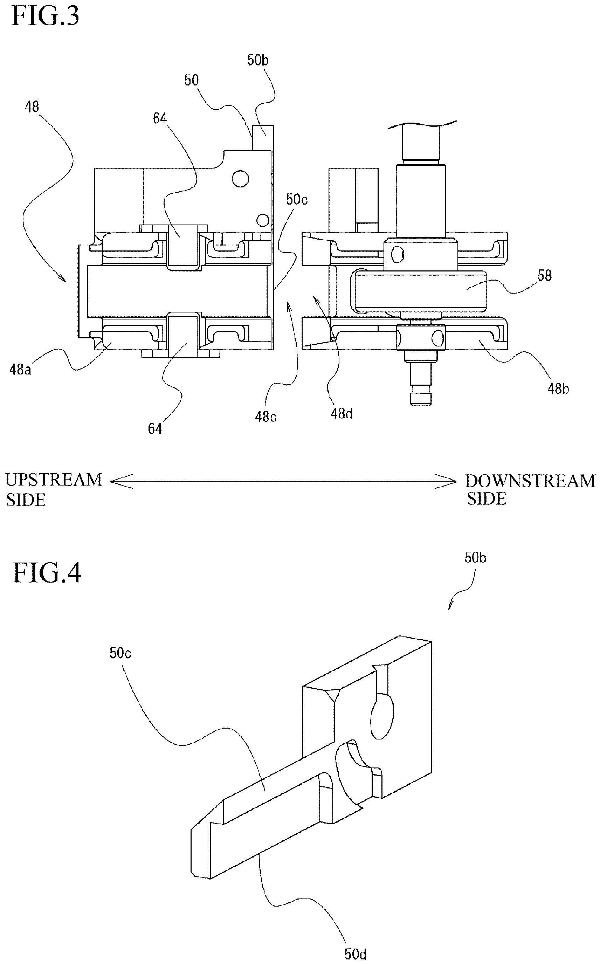

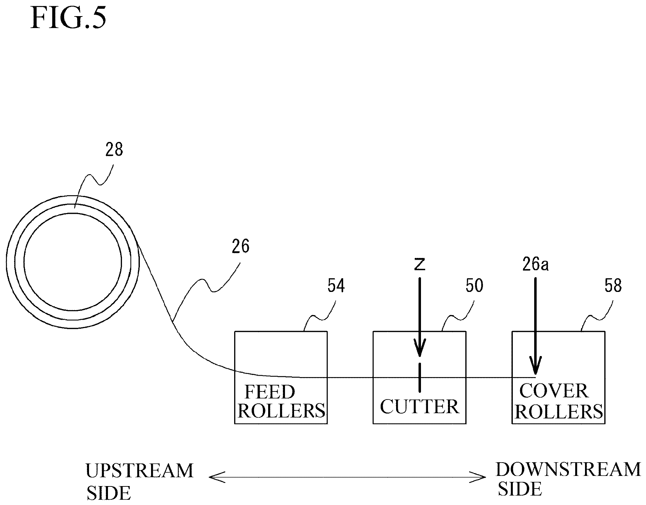

Next, a configuration between the mounting portion 30 and the sealing unit 42 will be described in detail. Fig. 2 is a perspective view illustrating the configuration between the mounting portion 30 and the sealing unit 42. Fig. 3 is a plan view illustrating the configuration between the mounting portion 30 and the sealing unit 42. Note that part of the configuration such as a cutter blade 50a is not illustrated in Fig. 3 for the sake of visibility. Fig. 4 is a perspective view illustrating a reception part 50b that is part of the cutter 50. Fig. 5 is an explanatory view illustrating a state of the cover film 26 during the sealing operation, and illustrates a state where the cover film 26 is cut by the cutter 50.

As illustrated in Figs. 2 and 3, a support lane member 48 is provided between the mounting portion 30 and the sealing unit 42 to support the cover film 26 drawn diagonally downward. The support lane member 48 is split, at an intermediate portion, into a first support lane member 48a on the upstream side and a second support lane member 48b on the downstream side. The first support lane member 48a has a splitting surface provided with the cutter 50 by which the cover film 26 is cut in the predetermined length.

The cutter 50 includes the cutter blade 50a driven by a drive unit 52, and the reception part 50b that receives the cutter blade 50a at the time of cutting, and is disposed to have a cutting surface 50c oriented orthogonal to the direction of feeding of the cover film 26 by the feed rollers 54 (hereinafter, may be also simply referred to as "feed direction"). Thus, the cover film 26 can be cut in a square or an oblong shape.

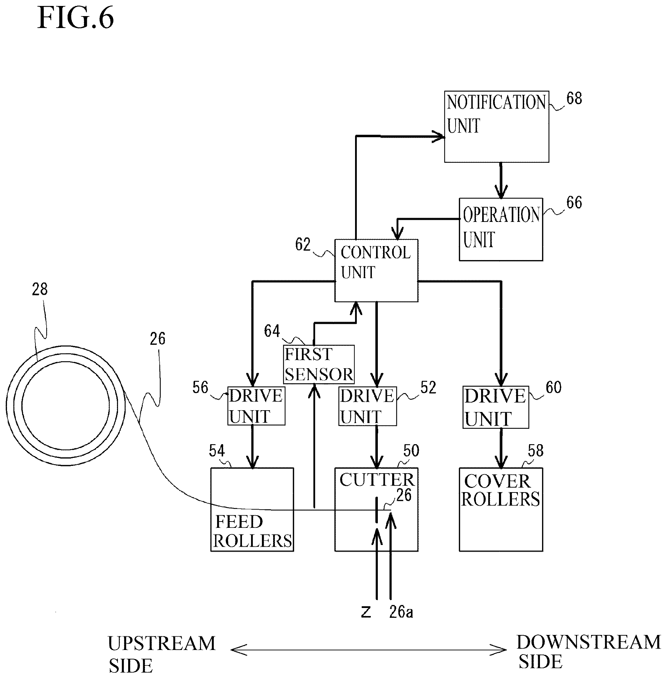

The drive unit 52 is configured to be drivingly controlled by a control unit 62, and the cutter blade 50a is configured to be drivingly controlled by the control unit 62 through the drive unit 52 (see Fig. 6). The control unit 62 includes a CPU and a memory, and operates based on an operation program set in advance and a setting signal input from the operation unit 66.

A pair of the feed rollers 54 that are driven by a drive unit 56, and nip and feed the cover film 26 are provided between the mounting portion 30 and the cutter 50. A pair of the cover rollers 58 that are driven by a drive unit 60, and nip and feed the cover film 26 are provided between the sealing unit 42 and the cutter 50. The drive units 56 and 60 are configured to be drivingly controlled by the control unit 62, and the feed rollers 54 and the cover rollers 58 are configured to be drivingly controlled by the control unit 62 through the respective drive units 56 and 60 (see Fig. 6).

In the present embodiment, a stepping motor is provided as the drive unit 56 that drives the feed rollers 54. The control unit 62 is configured to drivingly control the feed rollers 54 by controlling the rotation angle and the rotation direction of the stepping motor. While the configuration of the drive unit 56 is not limited, with the configuration as in the present embodiment in which the drive unit 56 is a motor such as a stepping motor or a servo motor for example, and the control unit 62 controls the rotation speed or the rotation angle and the rotation direction of the motor, the cover film 26 can be accurately fed by an amount corresponding to the set length.

With the configuration described above, the sealing operation can be performed with the cover film 26 drawn from the holder 28 fed by the feed rollers 54 to be drawn to the position between the cutter blade 50a and the reception part 50b, with the cutter blade 50a operated to cut the cover film 26 in a predetermined length from a leading end portion 26a, and with the cut cover film 26 fed forward by the cover rollers 58 to be supplied to the sealing unit 42 (see Fig. 5).

The leading end portion 26a of the cover film 26 at the start of the sealing operation is aligned with a cut position Z of the cutter 50 (the position matching the cut surface 50c of the cutter 50) through initial positioning described below. Thus, the sealing can be performed with the cover films 26 having the same dimension reliably stuck to all the slide glasses 12 in one basket 14, by repeating an operation in which the cover film 26 of a fixed dimension corresponding to the set length is accurately fed by the motor such as a stepping motor or a servo motor for example and cut by the cutter 50, and then supplied to the sealing unit 42.

When the sealing is completed for all the baskets 14 and the apparatus 10 stops operating, the cover film 26 is removed from the mounting portion 30 together with the holder 28 to be stored, by the user. An opening-closing door 47 provided on the front surface of the apparatus 10 enables the right side of the apparatus 10, where the mounting portion 30 and the like are disposed, to be entirely opened.

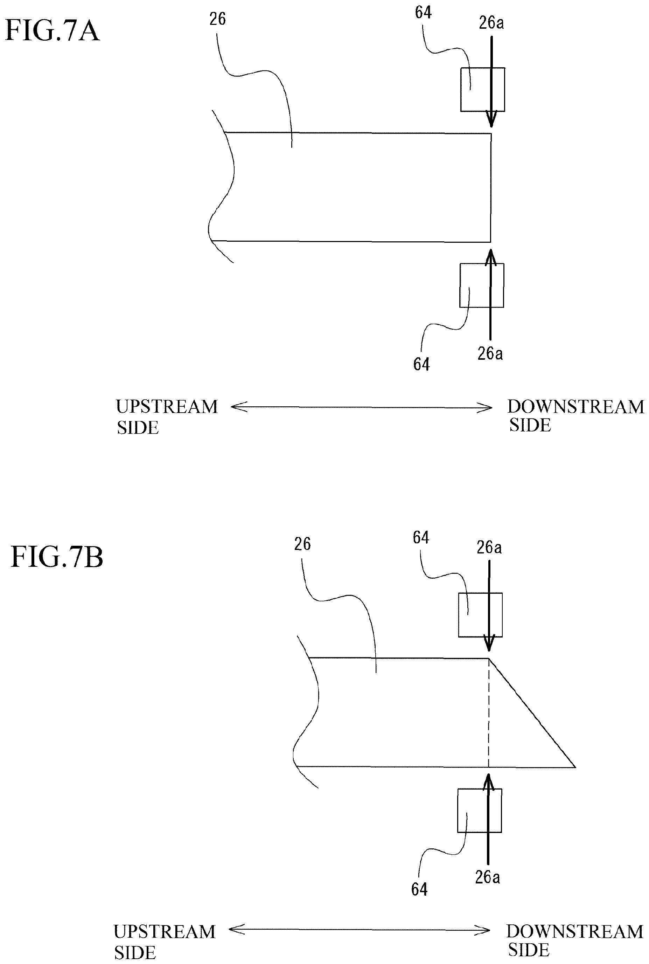

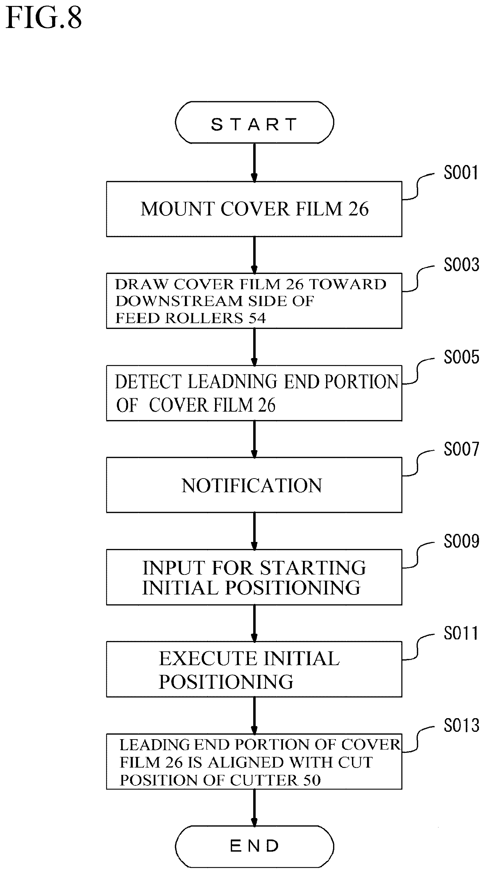

Next, a configuration and a control operation related to the initial positioning for the cover film 26 will be described. As described above, the initial positioning for the cover film 26 is for aligning the leading end portion 26a of the cover film 26 with the cut position Z of the cutter 50 before the sealing operation starts. Fig. 6 is an explanatory view illustrating a block diagram representing a control mechanism related to the sealing apparatus 10 together with the state of the cover film 26 at the time of initial positioning, and illustrates a state where the cover film 26 is cut by the cutter 50. Figs. 7A and 7B are explanatory views illustrating examples of the shape of the leading end portion 26a of the cover film 26. Fig. 8 is a flowchart illustrating an example of a control operation related to the initial positioning for the cover film 26.

To begin with, as the configuration related to the initial positioning, as illustrated in Figs. 2, 3, and 6, first sensors 64 that can detect the leading end portion 26a of the cover film 26 are provided on the downstream side of the feed rollers 54. Thus, the leading end position of the cover film 26 drawn to the downstream side of the feed rollers 54 can be recognized. The type of the first sensors 64 is not limited. For example, various optical sensors and the like may be used. The position and the number of the first sensors 64 are also not limited. For example, in the present embodiment, a pair of the first sensors 64 are attached to the first support lane member 48a to have the cover film 26 provided in between, between the feed rollers 54 and the cutter 50. With this configuration, even when the leading end portion 26a of the cover film 26 does not have a straight shape as illustrated in Fig. 7A (that is, a case where the leading end portion 26a is orthogonal to the feed direction), and has a slanted shape as illustrated in Fig. 7B (that is a case where the leading end portion 26a is not orthogonal to the feed direction), the leading end portion 26a of the cover film 26 can be accurately detected from both sides reliably. Specifically, for the cover film 26 having the leading end portion 26a with a slanted shape, a portion indicated by a dashed line in Fig. 7B is reliably detected as the leading end portion 26a, so that the positioning can be performed through a procedure that is the same as that for the cover film 26 having the normal leading end portion 26a with a straight shape.

With the pair of first sensors 64 thus disposed on a plane orthogonal to the feed direction of the cover film 26 to have the cover film 26 provided in between, the leading end portion 26a of the cover film 26 can be accurately detected reliably, regardless of the shape of the leading end portion 26a.

Next, the control operation related to the initial positioning will be described with reference to Figs. 6, 8 and the like. The control operation related to the initial positioning for the cover film 26 starts when the power switch 11 is turned ON to start the use of the sealing apparatus 10 (START). The control operation is divided into a preparation stage (S001 to S007) for the initial positioning, and an execution stage (S009 to S013) for the initial positioning.

First of all, as the preparation stage for the initial positioning, the user opens the opening-closing door 47, and mounts the holder 28 around which the cover film 26 is wound to the mounting portion 30 (S001).

Next, the cover film 26 is drawn from the holder 28 by the user, toward the downstream side of the feed rollers 54 while being guided by the guide rollers 32 (this procedure is not required in a configuration without the guide rollers 32) (S003). In this process, the feed rollers 54 are freely rotatable, so that the cover film 26 can be inserted between the pair of feed rollers 54 by the user to have the leading end portion 26a passed through the feed rollers 54 toward the downstream side.

Next, the first sensors 64 detect the leading end portion 26a of the cover film 26 drawn toward the downstream side of the feed rollers 54 (S005). Thus, the preparation for the execution of the initial positioning is completed in the sealing apparatus 10.

Next, upon receiving a detection signal from the first sensors 64, the control unit 62 makes the notification unit 68 issue a notification indicating the detection of the leading end portion 26a of the cover film 26 (S007).

In the present embodiment, the notification in this step S007 is issued through buzzer sound and character display respectively from the buzzer (not illustrated) and the display panel (see Fig. 1) that serve as the notification unit 68. Still, the type, position, number, and notification means of the notification unit 68 are not limited, and known notification means of a known notification device may be employed as appropriate. For example, the display means may be voice guidance or the like, or displaying of graphics, signs, and the like.

When the notification means is based on words such as character display and voice guidance as in the present embodiment, the notification indicating the detection of the leading end portion 26a of the cover film 26 may be issued using a direct expression, or for example, issued as a "notification indicating the completion of the preparation for the execution of the initial positioning (S011) (indicating that the initial positioning can be executed)", "notification inducing an input for starting the execution of the initial positioning (S009)", or the like. The expression "issue a notification indicating the detection of the leading end portion 26a of the cover film" in claim of the present application includes such operations and effects as a result of the detection of the leading end portion 26a of the cover film 26 as described above.

This step S007 can further make the user appropriately draw the cover film 26. Specifically, when the cover film 26 is insufficiently drawn, or when the drawing direction is deviated from the feed direction, the first sensors 64 cannot detect the leading end portion 26a of the cover film 26, and under such a condition, the notification is never issued from the notification unit 68 (S007). Thus, the user draws the cover film 26 by an amount corresponding to the length sufficient for the leading end portion 26a to be detected by the first sensors 64 and in an appropriate direction matching the feed direction so that the leading end portion 26a can be accurately detected, to make the notification unit 68 issue the notification (S007). As a result, the first sensors 64 can accurately detect the leading end portion 26a of the cover film 26 reliably, whereby the positioning can be accurately performed.

Next, as the execution stage of the initial positioning, the user closes the opening-closing door 47 upon receiving the notification from the notification unit 68, and performs the input (S009) on the operation unit 66 to start the execution of the initial positioning (SO11). Thus, with this step S009, the execution of the initial positioning by the control unit 62 (S011) can be started at a desired timing.

In the present embodiment, the input in this step S009 is performed on the operation panel (see Fig. 1) serving as the operation unit 66. Still, the type, position, and number of the operation units 66 are not limited. A touch panel or the like may be configured to be used as both of the notification unit 68 and the operation unit 66.

Next, the control unit 62 upon receiving information input by the user, performs control to drive the feed rollers 54 using the drive unit 56 based on position information on the leading end portion 26a of the cover film 26 from the first sensors 64, to feed the cover film 26 forward or backward for drawing the cover film 26 to a position where the leading end portion 26a of the cover film 26 protrudes from the cut position Z of the cutter 50 for the predetermined length, and to then drive the cutter 50 using the drive unit 52 to cut the cover film 26 (S011). Thus, the initial positioning is executed.

The control operation based on the position information on the leading end portion 26a of the cover film 26 from the first sensors 64 as used herein may be a control operation of recognizing the leading end position of the cover film 26 with the position information received from the first sensors 64 in real time, or may be a control operation of recognizing the leading end position of the cover film 26 by recognizing the amount and direction of separation or reapproaching of the cover film 26 from or to a reference position corresponding to one position information detected by the first sensors 64, based on, for example, driving force (when the drive unit 56 is a motor such as a stepping motor or a servo motor for example, the rotation force of the motor), a driving amount (the rotation speed or the rotation angle of the motor for example), a driving direction (the rotation direction of the motor for example), and the like. It is a matter of course that the initial positioning (S011) may be executed using both of the control operations, instead of only one of the control operations. The expression "based on position information on the leading end portion 26a of the cover film from the first sensor" in claim of the present application includes both of based on the real-time position information from the first sensors 64 and using as the reference, the leading end position based on the position information from the first sensors 64 at the timing when the cover film 26 is drawn toward the downstream side of the feed rollers 54.

With this step S011, the leading end position of the cover film 26 can be accurately recognized based on the position information from the first sensors 64, and the cover film 26 can be fed forward or backward by the feed rollers 54 drivingly controlled based on the current drawn state of the cover film 26, to be accurately drawn to a position where the leading end position 26a protrudes from the cut position Z of the cutter 50 for the predetermined length, and then cut by the cutter 50 driven.

As a result, the initial positioning is completed with the leading end portion 26a of the cover film 26 aligned with the cut position Z of the cutter 50 (S013), and the control operation related to the initial positioning for the cover film 26 ends (END).

Thus, compared with a conventional configuration in which the user manually operates the cutter 50 to cut the cover film 26 while visually recognizing the leading end position of the cover film 26, the operability is improved due to higher user friendliness, and workability is improved due to a smaller amount of time and labor required. Furthermore, the initial positioning can be executed in a state where the opening-closing door 47 is closed, and thus can be safely performed, while preventing the contamination and attachment of foreign object on and in the cover film 26 and the sealing apparatus 10. The control operation is accurately performed based on the position information from the first sensors 64, whereby the positioning can be accurately performed without wasting the cover film 26.

In one example, the length for which the leading end portion 26a of the cover film 26 protrudes from the cut position Z of the cutter 50 is set to be extremely short, that is, about 1 to 3 mm. In view of this, in the present embodiment, the cover film 26 is accurately fed by a set length using the motor such as a stepping motor or a servo motor for example, so that the leading end portion 26a can accurately protrude from the cut position Z of the leading end portion 26a for the set length as described above reliably, whereby the positioning can be accurately performed without wasting the cover film 26.

A cover film piece 26b cut off by the cutter 50 as a result of the initial positioning for the cover film 26 as described above is discarded. The cover film piece 26b which is extremely small remaining in the sealing apparatus 10 may cause deterioration or failure of the sealing apparatus 10, or may attach to the cover film 26 to be sealed together with the specimen to be mixed into the microscope specimen, and thus is preferably removed swiftly.

In view of this, the configuration of the present embodiment, as illustrated in Figs. 2 and 3, is provided with a gap 48c of a predetermined length between the first support lane member 48a and the second support lane member 48b, and thus the cover film piece 26b cut off by the cutter 50 falls through the gap 48c. With the falling portion (this falling portion is referred to as a "first falling portion 48c" in the present application) for the cover film piece 26b, set to be the gap 48c of the predetermined length, provided adjacent to and on the downstream side of the cut position Z of the cutter 50, the cover film piece 26b can be swiftly removed through the falling, after the initial positioning has been executed. The portion where the cutter 50 is provided is not limited to the splitting surface of the first support lane member 48a, as long as the support lane member 48 is split into the first support lane member 48a on the upstream side and the second support lane member 48b on the downstream side with a gap of a predetermined interval provided in between at a portion where the cutter 50 is disposed. With this configuration, as described above, the cover film piece 26b can fall through the first falling portion 48c which is the gap 48c between the first support lane member 48a and the second support lane member 48b.

In the present embodiment, a second falling portion 48d is further provided by notching the downstream side of the splitting surface of the second support lane member 48b. Thus, the falling region is widened, whereby the falling of the cover film piece 26b is facilitated. A dust tray (not illustrated) in which the cover film piece 26b that has fallen is stored for disposal, is disposed below the first falling portion 48c and the second falling portion 48d.

In the present embodiment, as illustrated in Fig. 4, the reception part 50b of the cutter 50 is provided with a notched part 50d formed by notching a surface to be the cut surface 50c of the cutter 50. With this configuration, the cover film piece 26b cut off by the cutter 50 is prevented from attaching to this cut surface 50c. If the cover film piece 26b attaches to the cut surface 50c of the cutter 50, the cover film piece 26b is likely to attach to the cover film 26 at the time of cutting by the cutter 50 and the like during the sealing operation, and thus is likely to be sealed together with the specimen to be mixed in the microscope specimen. In view of this, the notched part 50d formed by notching the cut surface 50c of the cutter 50 is provided as described above, so that the cover film piece 26b can be prevented from attaching to the cut surface 50c, and can swiftly fall through the first falling portion 48c and the second falling portion 48d to be removed.

### (Second embodiment)

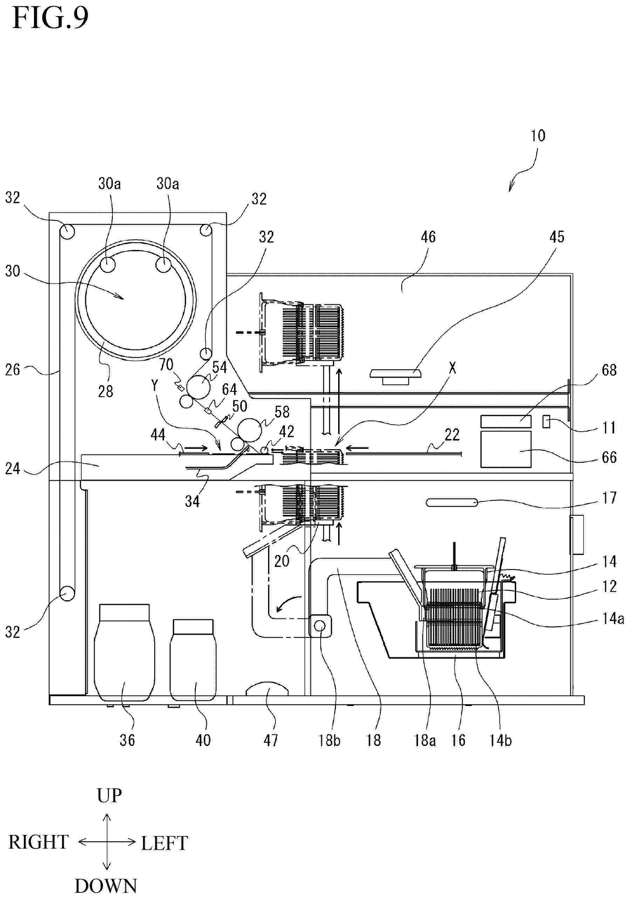

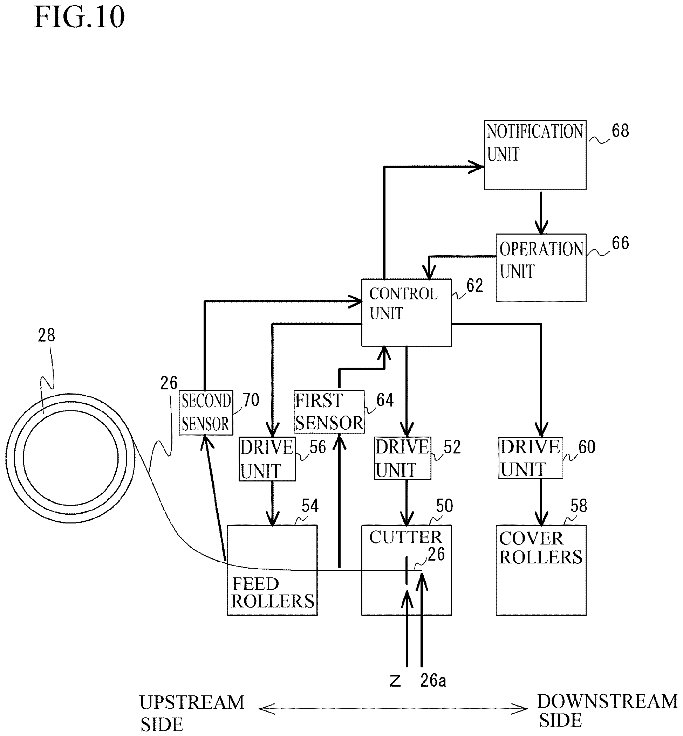

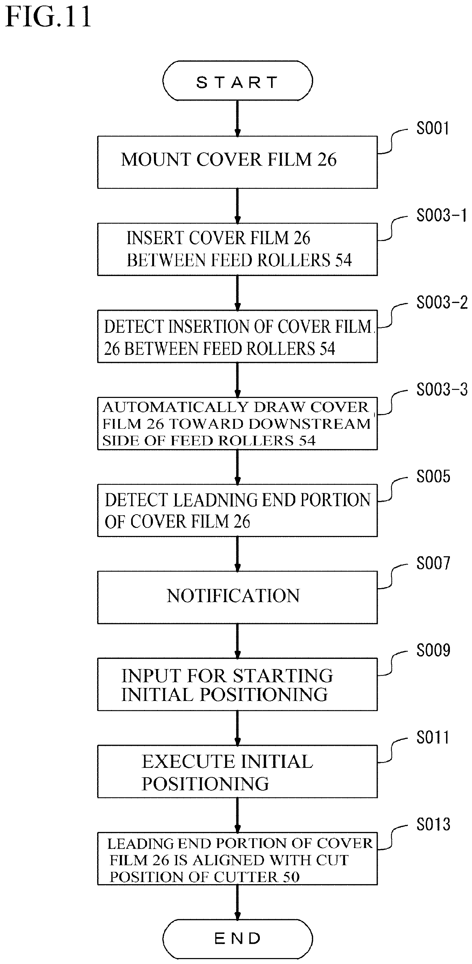

Next, a second embodiment of the present invention will be described. In the present embodiment, parts different from the first embodiment will be mainly described. Fig. 9 is a schematic view illustrating an example of the sealing apparatus 10 according to the present embodiment, and is a front view in which part of the internal is visible. Fig. 10 is an explanatory view illustrating a block diagram representing a control mechanism related to the sealing apparatus 10 according to the present embodiment together with the state of the cover film 26 at the time of initial positioning, and illustrates a state where the cover film 26 is cut by the cutter 50. Fig. 11 is a flowchart illustrating an example of a control operation related to the initial positioning for the cover film 26 in the sealing apparatus 10 according to the present embodiment.

To begin with, the sealing apparatus 10 according to the present embodiment is provided with a second sensor 70 that can detect the insertion of the cover film 26 between the feed rollers 54, as illustrated in Figs. 9 and 10. The type of the second sensor 70 is not limited. For example, various optical sensors and the like may be used. The position and the number of the second sensors 70 are also not limited.

Next, the control operation related to the initial positioning for the cover film 26 in the sealing apparatus 10 according to the present embodiment will be described with reference to Figs. 10 and 11. In the sealing apparatus 10 according to the present embodiment, the control operation in step S003 is different from that in the first embodiment, due to the provision of the second sensor 70.

Specifically, in step S003 according to the present embodiment, the cover film 26 is drawn from the holder 28, and then is inserted between the pair of feed rollers 54, after being guided through the guide rollers 32 (this procedure is not required in a configuration without the guide rollers 32 as in the first embodiment), by the user (S003-1). While the cover film 26 needs to be drawn toward the downstream side of the feed rollers 54 in the first embodiment, the cover film 26 only needs to be inserted between the feed rollers 54 in the present embodiment.

As a result, the second sensor 70 then detects the insertion of the cover film 26 between the feed rollers 54 (S003-2).

As a result, the control unit 62 then receives a detection signal from the second sensor 70 and performs control to drive the feed rollers 54 using the drive unit 56 in such a manner that the cover film 26 is fed forward to be drawn to a position where the leading end portion 26a of the cover film 26 is detected by the first sensors 64 (S003-3).

As a result, the first sensors 64 detect the leading end portion 26a of the cover film 26 drawn toward the downstream side of the feed rollers 54 (S005) as in the first embodiment. Thus, the preparation for the execution for the initial positioning is completed in the sealing apparatus 10. Thereafter, the control operation that is the same as that in the first embodiment is performed.

According to the present embodiment, the control unit 62 drives the feed rollers 54, so that the cover film 26 can be automatically drawn to be in a detectable region of the first sensors 64 on the downstream side of the feed rollers 54. Thus, the user only needs to insert the leading end portion 26a of the cover film 26 between the feed rollers 54, whereby a labor is further reduced so that the operability and workability can be further improved compared with the first embodiment. Furthermore, the effect of preventing contamination and attachment of foreign object on an in the cover film 26 and the sealing apparatus 10 can be further improved.

The cover film 26 can be fed forward and drawn for a length required for the leading end portion 26a to be detectable by the first sensors 64, and in an appropriate direction enabling accurate recognition of the leading end portion 26a. Thus, the preparation for the initial positioning can be executed swiftly and accurately. With the leading end position of the cover film 26 accurately recognized based on the position information from the first sensors 64, the positioning can be accurately performed without wasting the cover film 26.

As described above, with the sealing apparatus according to the present invention, the initial positioning of aligning the leading end portion of the cover film with the cut position of the cutter can be safely executed with less time and labor, and thus the operability and workability can be improved, comparted with the conventional configuration. Furthermore, contamination and attachment of foreign objects on and in the cover film and the sealing apparatus are prevented, and the positioning can be performed accurately without wasting the cover film.

The present invention is not limited to the embodiments described above, and can be modified in various ways without departing from the present invention.

## Claims

1. A sealing apparatus comprising:
a mounting portion to which a cover film wound around a holder is mounted via the holder;
a cutter configured to cut the cover film into a predetermined length;
a sealing unit configured to stick the cover film cut into the predetermined length on a specimen disposed on a slide glass to seal the specimen;
feed rollers that are provided between the mounting portion and the cutter, and are capable of feeding the cover film, drawn from the holder, forward and backward;
a first sensor capable of detecting a leading end portion of the cover film on a downstream side of the feed rollers; and
a control unit configured to drivingly control the feed rollers and the cutter, wherein
when during initial positioning for the cover film, the cover film is drawn toward the downstream side of the feed rollers, and the first sensor detects the leading end portion of the cover film, the control unit performs control of
driving, based on position information on the leading end portion of the cover film from the first sensor, the feed rollers to feed the cover film forward or backward, to draw the cover film to a position where the leading end portion of the cover film protrudes from a cut position of the cutter for a predetermined length, and
then driving the cutter to cut the cover film.

2. The sealing apparatus according to claim 1 further comprising a notification unit configured to issue a notification indicating detection of the leading end portion of the cover film to a user, wherein
the control unit performs control of
making the notification unit issue the notification, when during the initial positioning for the cover film, the cover film is drawn toward the downstream side of the feed rollers, and the first sensor detects the leading end portion of the cover film,
then in response to information input from the user, driving the feed rollers based on the position information on the leading end portion of the cover film from the first sensor, to feed the cover film forward or backward, to draw the cover film to the position where the leading end portion of the cover film protrudes from the cut position of the cutter for the predetermined length, and
then driving the cutter to cut the cover film.

3. The sealing apparatus according to claim 1 or 2, wherein a pair of the first sensors are disposed on a plane orthogonal to a feed direction of the cover film on the downstream side of the feed rollers, to have the cover film provided in between.

4. The sealing apparatus according to any one of claims 1 to 3, wherein the cutter has a notched part that prevents attachment of a cover film piece cut off from the cover film during the initial positioning for the cover film, the notched part being provided by notching a cut surface of the cutter.

5. The sealing apparatus according to any one of claims 1 to 3, wherein a first falling portion through which a cover film piece cut off from the cover film during the initial positioning for the cover film falls, is provided on the downstream side of and adjacent to the cut position of the cutter, as a gap having a predetermined length.

6. The sealing apparatus according to claim 5 further comprising a support lane member that is provided between the mounting portion and the sealing unit, and is configured to support the cover film drawn from the holder, wherein
the support lane member is split, at a portion where the cutter is disposed, into a first support lane member on an upstream side and a second support lane member on the downstream side, with a gap of a predetermined interval in between,
the gap between the first support lane member and the second support lane member serves as the first falling portion, and
a second falling portion is further provided to the second support lane member by notching a splitting surface of the second support lane member on the downstream side.

7. The sealing apparatus according to any one of claims 1 to 6 further comprising a second sensor capable of detecting insertion of the cover film between the feed rollers, wherein
when during the initial positioning for the cover film, the cover film is inserted between the feed rollers and the second sensor detects the insertion of the cover film between the feed rollers, the control unit performs control of
driving the feed rollers to feed the cover film forward to draw the cover film to a position where the first sensor detects the leading end portion of the cover film.

8. The sealing apparatus according to any one of claims 1 to 7 further comprising a motor as a drive unit configured to drive the feed rollers, wherein
the control unit drivingly controls the feed rollers by controlling rotation speed or rotation angle and a rotation direction of the motor.
